# FASCICULE DE BREVET EUROPEEN

(11) **EP 1 215 365 B1**
(45) Date de publication et mention de la délivrance du brevet: **09.03.2005**
(21) Numéro de dépôt: 01403190.0
(22) Date de dépôt: 11.12.2001
(51) Int. Cl.: F01D 5/28, F01D 5/14

(54) **Volet redresseur de turbomachine et son procédé de réalisation**
Verstellbare Statorschaufel und Produktionsmethode
Adjustable guide vane and method of production therefor

(30) Priorité: 12.12.2000 FR 0016123
(43) Date de publication de la demande: 19.06.2002
(73) Titulaire: SNECMA MOTEURS, 75015 Paris (FR)
(72) Inventeur: Corbin, Claude-Gaston, 77950 Voisenon (FR); Le Francois, Jean-Marie, 33000 Bordeaux (FR); Mathias, Cyrille, 93190 Livry Gargan (FR)
(74) Mandataire: Joly, Jean-Jacques

(56) Documents cités:
- US-A- 4 022 540
- US-A- 4 273 601
- US-A- 5 392 514
- US-A- 5 598 760

## Description

### Arrière-plan de l'invention

L'invention concerne la réalisation de volets redresseurs de turbomachine, en particulier la réalisation de volets à angle de calage variable et leur implantation dans un carter d'entrée de turboréacteur.

De façon classique, des volets redresseurs comportent une partie à profil aérodynamique formant aube munie, à deux extrémités opposées, de parties d'attache qui, dans le cas de volets à angle de calage variable, forment des pivots alignés radialement . de tels volets sont divulgués dans le document US-A-4022540.

Il est connu de réaliser des aubes en matériau composite par drapage en forme de strates de renfort fibreux. Le drapage peut être réalisé sur une partie d'âme, ou noyau. Les strates sont imprégnées de résine, avant ou après drapage. Après polymérisation permettant le durcissement de la résine, on obtient une ébauche ayant une forme voisine de celle de l'aube à réaliser. L'ébauche est ensuite usinée à ses dimensions définitives.

Par rapport à une aube métallique, une aube en matériau composite apporte un gain de masse substantiel tout en conservant une très bonne tenue mécanique. Le problème qui se pose toutefois est de réaliser la liaison avec les parties d'attache. En effet, la solution connue consistant à réaliser un drapage localisé de strates de renfort de l'aube autour de parties d'attache métalliques peut s'avérer insatisfaisante, la liaison étant rendue fragile par la concentration, à son niveau, des efforts encaissés par l'aube qui doivent être repris par les parties d'attache.

### Objets et résumé de l'invention

L'invention a pour but de proposer une architecture de volet redresseur de turbomachine permettant notamment de résoudre le problème précité de transmission des efforts aux parties d'attache.

Ce but est atteint, conformément à l'invention, grâce à un volet redresseur qui comporte une poutre structurale comprenant une âme structurale d'aube et formée en une seule pièce avec au moins une partie des parties d'attache, et une enveloppe composite entourant l'âme structurale et formant au moins le profil aérodynamique de l'aube.

L'invention est remarquable notamment par la séparation entre la fonction structurale assurée par la poutre structurale et la fonction aérodynamique assurée par l'enveloppe de l'aube. La continuité structurale entre l'âme de l'aube et les parties d'attache assure directement la transmission des efforts appliqués à l'aube, sans risque de déliaison entre l'aube et les parties d'attache.

La poutre structurale est avantageusement réalisée en matériau composite. Elle pourrait être métallique.

Selon une particularité du volet redresseur conforme à l'invention, l'une au moins des parties d'attache est munie d'une frette métallique qui, lorsque cette partie d'attache constitue un pivot, est bloquée en rotation par rapport à la partie d'attache autour de l'axe du pivot.

Selon une autre particularité du volet redresseur, il comporte des passages internes s'ouvrant, d'une part, à une extrémité d'au moins une partie d'attache et, d'autre part, le long d'au moins l'un des bords de l'aube.

De tels volets redresseurs munis de passages internes peuvent avantageusement être implantés dans un carter d'entrée de turbomachine entouré d'un collecteur de dégivrage, les parties d'attache dans lesquelles s'ouvrent les passages internes des volets étant alors implantées dans le carter d'entrée au niveau du collecteur de dégivrage afin de faire communiquer celui-ci avec lesdits passages internes.

L'invention a aussi pour but de fournir un procédé de réalisation de volet redresseur tel que défini ci-dessus. Selon l'invention, un tel procédé comprend les étapes qui consistent à :
- réaliser une poutre structurale comportant une âme structurale d'aube formant une seule pièce avec au moins des noyaux structuraux de parties d'attache, et
- draper des strates de renfort fibreux autour de la poutre structurale afin de réaliser une enveloppe composite entourant l'âme structurale et formant au moins le profil aérodynamique de l'aube.

### Brève description des dessins

L'invention sera mieux comprise à la lecture de la description faite ci-après à titre indicatif mais non limitatif, en référence aux dessins annexés sur lesquels :
- la figure 1 est une vue schématique d'un volet redresseur tel qu'il peut être réalisé conformément à l'invention ;
- la figure 2 est une vue en coupe suivant le plan II-II de la figure 1 ;
- la figure 3 est une vue en coupe suivant le plan III-III de la figure 1 ;
- les figures 4A et 4B montrent deux étapes de réalisation de la poutre structurale en matériau composite du volet des figures 1 à 3 ;
- la figure 5 est une vue partielle qui montre la réalisation de l'enveloppe d'aube du volet des figures 1 à 3 ;
- la figure 6 est une vue schématique d'une ébauche de volet telle qu'obtenue après le procédé illustré par les figures 4A, 4B et 5 ;
- les figures 7 et 8 montrent deux variantes de montage d'une frette métallique sur une partie d'attache d'un volet obtenu après usinage de l'ébauche de la figure 6 ;
- la figure 9 est une vue schématique en coupe montrant une variante de réalisation d'un volet redresseur tel qu'il peut être réalisé conformément à l'invention ;
- les figures 10A et 10B sont des vues en coupe montrant deux étapes de réalisation de la poutre structurale en matériau composite du volet de la figure 9 ;
- la figure 11 montre la réalisation de l'enveloppe d'aube du volet de la figure 9 ; et
- la figure 12 est une vue très schématique montrant l'implantation d'un volet tel que celui de la figure 9 dans un carter d'entrée de turbomachine.

### Description détaillée de modes de réalisation

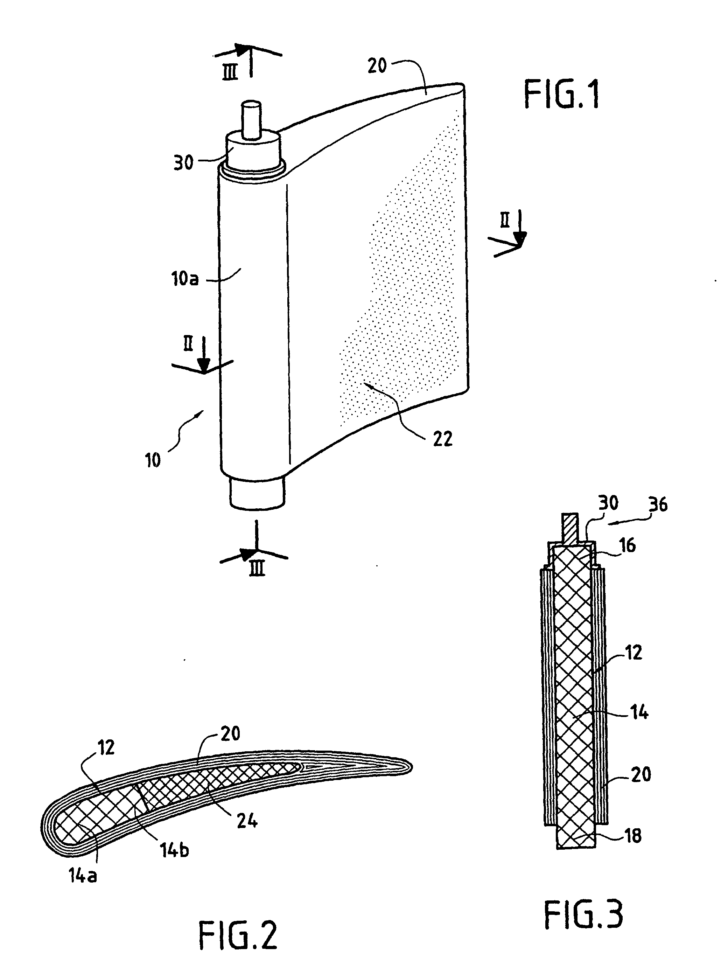

Les figures 1 à 3 montrent un volet redresseur 10 réalisé conformément à l'invention. Dans l'exemple illustré, il s'agit d'un volet redresseur de turbomachine à angle de calage variable. L'invention n'est toutefois pas limitée à des volets redresseurs de turbomachine de ce type.

Le volet 10 comprend essentiellement une poutre structurale 12 qui s'étend sur toute la hauteur du volet et comprend une âme structurale d'aube 14 formée en une seule pièce avec des parties d'attache 16, 18 aux extrémités opposées de l'âme structurale.

Une frette métallique 30 est engagée sur la partie d'attache 16 destinée à être reliée à une biellette de commande de la position angulaire du volet. Une frette métallique peut aussi être engagée sur l'autre partie d'attache 18.

Une enveloppe 20 entoure l'âme structurale 14 de l'aube et forme le profil aérodynamique de l'aube 22 du volet.

Dans le mode de réalisation illustré, la poutre structurale s'étend le long d'un des bords 10a du volet. Dans d'autres modes de réalisation de volets, la poutre structurale pourrait s'étendre dans la partie médiane du volet.

Toujours dans le mode de réalisation illustré, l'âme structurale 14 de l'aube comprend une partie 14a qui s'étend dans le prolongement des parties d'attache 16, 18 et une partie 14b qui s'étend à partir de la partie 14a, sur une distance limitée au sein du profil aérodynamique de l'aube.

Un noyau 24 prolonge la partie 14b, l'ensemble formé par l'âme 14 et le noyau 24 étant entouré par l'enveloppe 20 d'épaisseur sensiblement constante.

En variante, la partie 14b pourrait être prolongée jusqu'à occuper le volume occupé par le noyau 24.

Encore en variante, le noyau 24 pourrait être remplacé par une cavité.

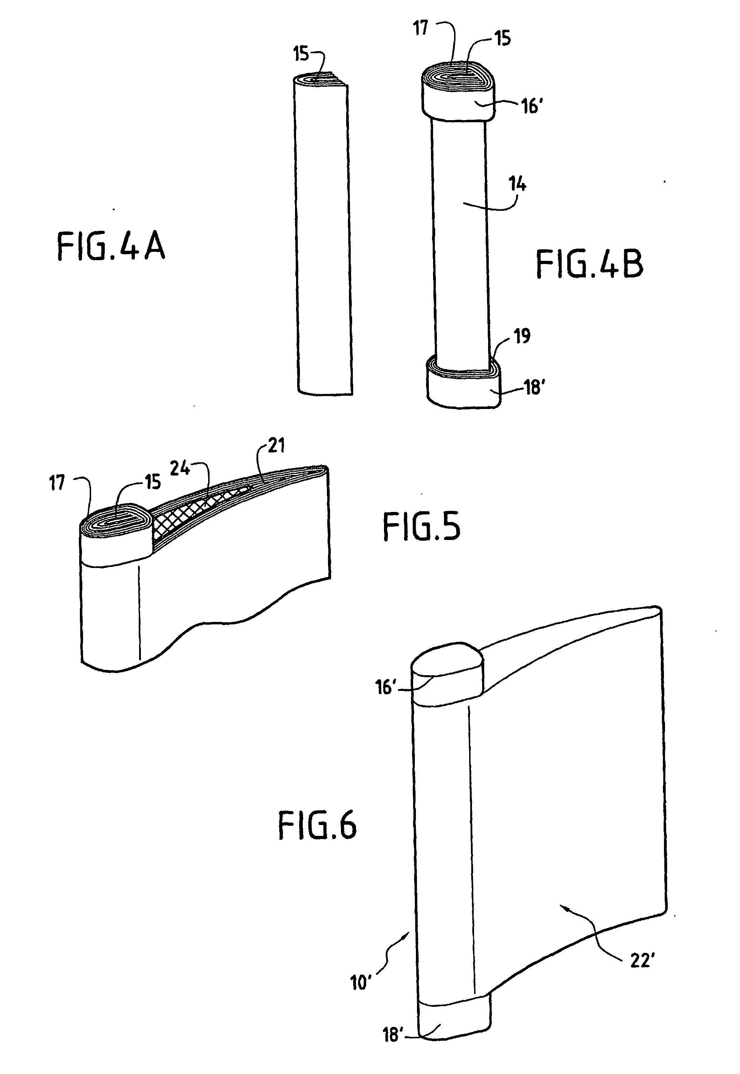

La poutre structurale 12 peut être métallique. Elle est toutefois réalisée de préférence en matériau composite, par exemple comme illustré par les figures 4A et 4B.

L'âme structurale de l'aube est formée par drapage de strates de renfort fibreux 15, par exemple de strates en tissu de fibres de carbone imprégné par une résine telle qu'une résine organique. Les strates 15 s'étendent sur toute la hauteur de la poutre structurale, y compris les parties d'attache.

Des strates supplémentaires 17 sont ajoutées pour former une ébauche 16' de la partie d'attache 16 à une extrémité de la poutre structurale, tandis que des strates supplémentaires 19 sont ajoutées pour former une ébauche 18' de la partie d'attache 18 à l'autre extrémité. Les strates 17 et 19 sont de préférence de même nature que les strates 15. Elles sont drapées sur ces dernières aux extrémités qui dépassent l'emplacement de l'âme structurale de l'aube.

Un traitement thermique est réalisé pour polymériser la résine d'imprégnation des strates 15, 17, 19.

En variante, on pourra utiliser des strates de renfort fibreux sèches, l'imprégnation par une résine étant réalisée après drapage des strates, par exemple de façon bien connue, par injection de la résine dans un moule.

L'enveloppe 20 de l'aube est formée par drapage de strates de renfort fibreux 21 autour de l'âme structurale 14 prolongée par le noyau 24 (figure 5).

Les strates 21 sont par exemple en tissu de fibres de carbone imprégnées par une résine organique.

Les fibres de carbone constitutives des strates 21 peuvent être identiques ou non à celles constitutives des strates 15, 17, 19. Dans la mesure où l'enveloppe 20 ne remplit pas la même fonction structurale que la poutre 12, les fibres de carbone constitutives des strates 21 peuvent être des fibres à haut module d'Young, tandis que les fibres de carbone constitutives des strates 15, 17, 19 peuvent être des fibres à haute résistance mécanique.

Un traitement thermique est réalisé pour polymériser la résine d'imprégnation des strates 21.

Un même traitement thermique pourra être réalisé pour polymériser simultanément la résine d'imprégnation des strates 21 et la résine d'imprégnation des strates 15, 17, 19.

Les strates 21 pourront être drapées à l'état sec, l'imprégnation par la résine étant réalisée après le drapage, par exemple par injection de résine dans un moule. Dans la mesure où une même résine est utilisée pour l'imprégnation des strates 15, 17, 19, 21, le drapage de toutes les strates pourra être réalisé à sec, avant imprégnation simultanée de toutes les strates.

Les strates 21 pourront, au moins en partie, s'étendre sur toute la hauteur de la poutre structurale, les parties d'extrémité des strates étant drapées autour des ébauches 16', 18' des parties d'attache formant en quelque sorte des noyaux des parties d'attache.

On obtient une ébauche 10' de volet (figure 6) avec une ébauche d'aube 22' formée par le drapage des strates 21 et les ébauches 16', 18' des parties d'attache.

Le volet 10 est obtenu par usinage de l'ébauche 10'. La frette métallique 30 est ensuite mise en place sur la partie d'attache 16 par exemple par frettage à chaud. La précision de calage du volet n'est alors pas affectée par la dilatation thermique du matériau composite de la partie d'attache 16, celle-ci restant enserrée dans la frette 30.

Afin d'éviter toute rotation relative entre la frette 30 et la partie d'attache 16 formant pivot 36 du volet, un blocage en rotation pourra être prévu entre la frette 30 et la partie d'attache 16 autour de l'axe du pivot.

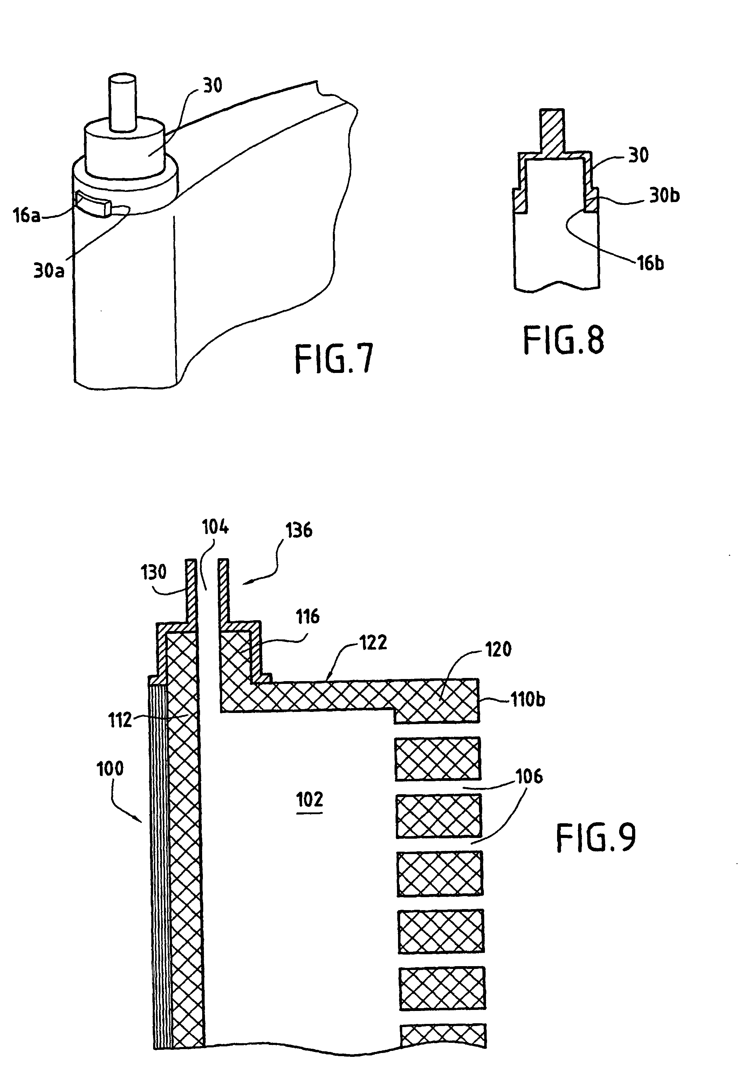

Un tel blocage en rotation peut être réalisé en formant une ou plusieurs encoches ou fraisures 30a à la base de la frette 30 dans lesquelles s'engagent des créneaux 16a usinés sur la partie d'attache 16 (figure 7).

Selon un autre mode de réalisation, un ou plusieurs méplats 16b sont formés sur le bord de la partie d'attache 16, contre lesquels s'appuient des méplats 30b formés sur la face interne de la frette 30 (figure 8).

Une frette métallique peut aussi être montée sur la partie d'attache 18 formant pivot 38 du volet.

La figure 9 illustre un autre mode de réalisation d'un volet redresseur 100 pour turbomachine qui se distingue de celui de la figure 2 en ce qu'il comporte une cavité interne 102 qui communique avec un passage longitudinal 104 formé dans la poutre structurale 112 et s'ouvrant à l'extrémité de la partie d'attache 116. Le passage 104 se prolonge à travers la frette métallique 130 qui, avec la partie d'attache 116, forme un pivot 136 avec passage axial.

La cavité 102 s'étend pour partie dans l'âme structurale 114 de l'aube 122 et pour partie dans la partie à profil aérodynamique de l'aube 122.

La cavité 102 communique également avec l'extérieur à travers des passages 106 qui s'étendent sensiblement perpendiculairement à la poutre 112 et s'ouvrent dans le bord 110b du volet, en l'espèce le bord de fuite.

Lorsque le volet 100 est un volet à angle de calage variable de redresseur d'entrée de turboréacteur, les passages internes 104, 102, 106 permettent la circulation de gaz chaud de dégivrage.

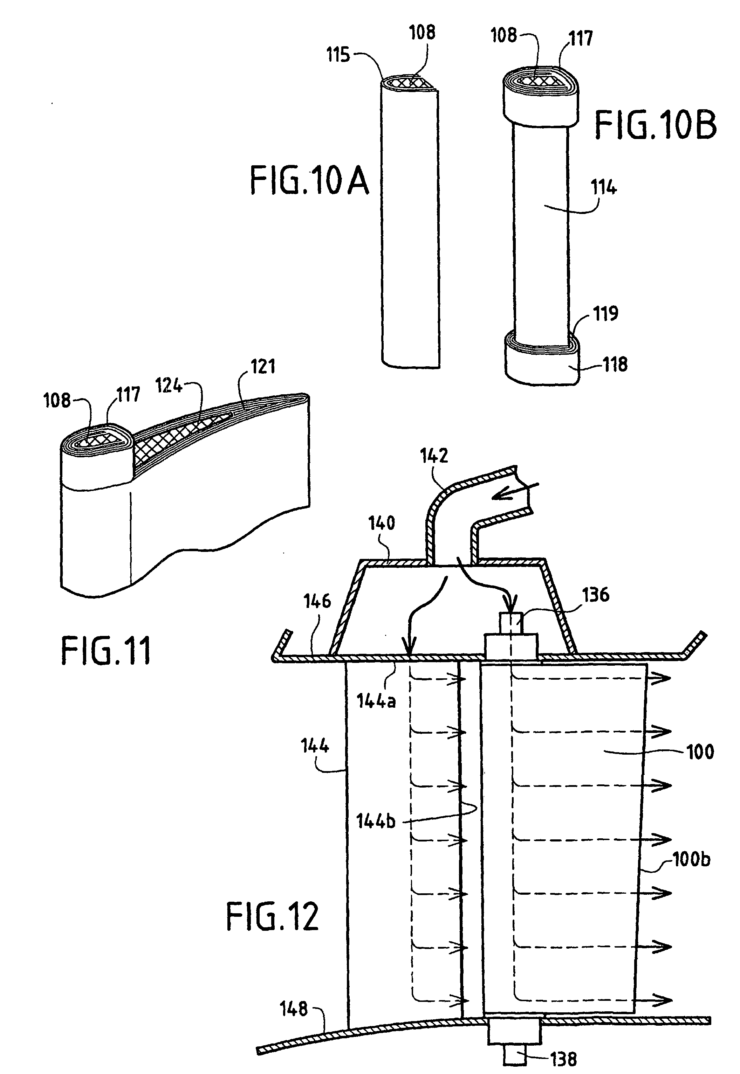

La réalisation de la poutre structurale 112 du volet 100 (figures 10A et 10B) se distingue de celle du volet 10 en ce que les strates de renfort fibreux 115 de l'âme structurale de l'aube et les strates de renfort fibreux 117 de la partie d'attache 116 sont drapées autour d'un noyau 108. Le noyau 108 a la forme de la partie de la cavité 102 située dans l'âme structurale 114 et du passage 104. Des strates supplémentaires 119 sont drapées pour former la partie d'attache 118, comme décrit pour le volet 10.

L'enveloppe composite 120 de la partie d'aube 122 est formée par drapage de strates 121 autour de l'âme structurale d'aube 114 complétée par un noyau 124 dont la forme correspond à celle de la partie de cavité 102 située dans le profil aérodynamique de l'aube (figure 11). Les strates de renfort fibreux de la poutre structurale 112 et de l'enveloppe 122, ainsi que la ou les résines d'imprégnation des strates sont semblables à celles décrites plus haut en relation avec le volet 10.

Les noyaux 108 et 124 sont en un matériau facilement éliminable par fusion ou dissolution afin d'obtenir la cavité 102 et le passage 104 après réalisation de l'ébauche de volet.

Les passages 106 peuvent être obtenus par usinage lors de la phase finale d'usinage du volet 100 à partir de l'ébauche.

La figure 12 montre de façon très schématique un carter d'entrée de turboréacteur dans lequel sont implantés des volets 100 tels que celui de la figure 9 pour former un redresseur d'entrée (un seul volet 100 est montré sur la figure 12).

Un collecteur 140 de gaz chaud de dégivrage de forme annulaire entoure la partie de carter extérieur 146 et reçoit un gaz chaud, par exemple de l'air réchauffé par le moteur, par l'intermédiaire d'une canalisation 142.

Le volet 100 est monté de manière que l'extrémité du pivot 136 s'ouvre à l'intérieur du collecteur 140. De la sorte, de l'air chaud circule à l'intérieur du volet 100, à travers le passage 104, la cavité 102 et les passages 106 avant d'être éjecté au niveau du bord de fuite 100b.

L'autre partie d'attache du volet 100, munie éventuellement d'une frette métallique, forme un pivot 138 logé dans la partie de carter intérieur 148.

Des bras 144 (un seul est représenté sur la figure 12) s'étendent entre les parties de carter 146 et 148. De façon connue, les bras 144 sont creux et présentent des passages internes qui s'ouvrent respectivement à l'extrémité 144a raccordée à la partie de carter extérieur 146 et à travers des orifices formés le long du bord de fuite 144b.

Les bras 144 ont leurs extrémités 144a raccordées au niveau du collecteur de dégivrage 140 de sorte que de l'air chaud de dégivrage parcourt les bras et est éjecté au niveau de leurs bords de fuite, immédiatement en amont des emplacements des volets 100.

## Revendications

1. Volet redresseur de turbomachine comportant une partie à profil aérodynamique formant aube (22 ; 122) réalisée au moins partiellement en matériau composite et munie, à deux extrémités opposées, de parties d'attache (16, 18; 116, 118), ledit volet étant **caractérisé en ce qu'**il comporte une poutre structurale (12 ; 112) comprenant une âme structurale d'aube et formée en une seule pièce avec au moins une partie des parties d'attache, et une enveloppe composite (20 ; 120) entourant l'âme structurale et formant au moins le profil aérodynamique de l'aube.

2. Volet redresseur selon la revendication 1, **caractérisé en ce que** la poutre structurale (12 ; 112) est en matériau composite.

3. Volet redresseur selon l'une quelconque des revendications 1 et 2, **caractérisé en ce que** l'une au moins des parties d'attache (16 ; 116) est munie d'une frette métallique (30 ; 130).

4. Volet redresseur selon la revendication 3, **caractérisé en ce que** la partie d'attache (16 ; 116) munie de la frette métallique constitue un pivot (36 ; 136), la frette métallique étant bloquée en rotation par rapport à la partie d'attache autour de l'axe du pivot.

5. Volet redresseur selon l'une quelconque des revendications 1 à 4, **caractérisé en ce qu'**il comporte des passages internes (104, 102, 106) s'ouvrant, d'une part, à une extrémité d'au moins une partie d'attache (116) et, d'autre part, le long d'au moins l'un des bords de l'aube (122).

6. Turbomachine comportant un ensemble de volets redresseurs implantés dans un carter d'entrée entouré d'un collecteur de dégivrage, **caractérisée en ce que** les volets redresseurs sont conformes à la revendication 5 et les parties d'attache (116) dans lesquelles s'ouvrent les passages internes des volets sont implantées dans le carter d'entrée au niveau du collecteur de dégivrage (140) afin de faire communiquer celui-ci avec lesdits passages internes.

7. Procédé de fabrication d'un volet redresseur de turbomachine comportant une partie à profil aérodynamique formant aube (22 ; 122) réalisée au moins partiellement en matériau composite et munie, à deux extrémités opposées, de parties d'attache (16,18 ; 116, 118), ledit procédé étant **caractérisé en ce qu'**il comprend les étapes consistant à :
- réaliser une poutre structurale (12, 112) comportant une âme structurale d'aube formant une seule pièce avec au moins des noyaux structuraux de parties d'attache, et
- draper des strates de renfort fibreux (21 ; 121) autour de la poutre structurale afin de réaliser une enveloppe composite entourant l'âme structurale et formant au moins le profil aérodynamique de l'aube.

8. Procédé selon la revendication 7, **caractérisé en ce que** la poutre structurale est réalisée en matériau composite par drapage en forme de strates (15 ; 115) de renfort fibreux.

9. Procédé selon l'une quelconque des revendications 7 et 8, **caractérisé en ce que** des strates de renfort fibreux (21 ; 121) sont drapées autour d'un ensemble formé par l'âme structurale (14 ; 114) de l'aube et un noyau (24 ; 124) d'aube, pour former une enveloppe d'aube.

## Patentansprüche

1. Turbomaschinenrichtklappe mit einem Teil mit aerodynamischem Profil, das einen Flügel (22; 122) bildet, der wenigstens zum Teil aus Verbundwerkstoff gefertigt und an zwei gegenüberliegenden Enden mit Befestigungsteilen (16, 18; 116; 118) versehen ist, wobei die genannte Klappe **dadurch gekennzeichnet ist, daß** sie einen Strukturträger (12; 112), der einen Flügelstrukturkern aufweist und einstückig mit wenigstens einem Teil der Befestigungsteile gebildet ist, sowie eine Verbundhülle (20; 120) enthält, welche den Strukturkern umgibt und wenigstens das aerodynamische Profil des Flügels bildet.

2. Richtklappe nach Anspruch 1, **dadurch gekennzeichnet, daß** der Strukturträger (12; 112) aus Verbundwerkstoff besteht.

3. Richtklappe nach irgendeinem der Ansprüche 1 und 2, **dadurch gekennzeichnet, daß** wenigstens eines der Befestigungsteile (16; 116) mit einem Metallring (30; 130) versehen ist.

4. Richtklappe nach Anspruch 3, **dadurch gekennzeichnet, daß** das Befestigungsteil (16; 116), welches mit dem Metallring versehen ist, ein Drehgelenk (36; 136) bildet, wobei der Metallring gegenüber dem Befestigungsteil um die Achse des Drehgelenks drehgesichert ist.

5. Richtklappe nach irgendeinem der Ansprüche 1 bis 4, **dadurch gekennzeichnet, daß** sie Innendurchlässe (104, 102, 106) aufweist, die sich einerseits an einem Ende wenigstens eines Befestigungsteils (116) und andererseits entlang wenigstens einem der Ränder des Flügels (122) öffnen.

6. Turbomaschine mit einer Einheit aus Richtklappen, die in einem von einem Enteisungssammelbehälter umgebenen Eintrittsgehäuse angeordnet sind, **dadurch gekennzeichnet, daß** die Richtklappen entsprechend Patentanspruch 5 sind und daß die Befestigungsteile (116), in denen sich die Innendurchlässe der Klappen öffnen, in dem Eintrittsgehäuse im Bereich des Enteisungssammelbehälters (140) angeordnet sind, um diesen mit den Innendurchlässen zu verbinden.

7. Verfahren zur Herstellung einer Turbomaschinenrichtklappe mit einem Teil mit aerodynamischem Profil, das einen Flügel (22; 122) bildet, der wenigstens zum Teil aus Verbundwerkstoff gefertigt und an zwei gegenüberliegenden Enden mit Befestigungsteilen (16, 18; 116, 118) versehen ist, wobei das genannte Verfahren **dadurch gekennzeichnet ist, daß** es die Schritte umfaßt, welche darin bestehen:
- einen Strukturträger (12, 112) mit einem Flügelstrukturkern auszubilden, der mit wenigstens Strukturkernen von Befestigungsteilen ein einziges Teil bildet, und
- Faserverstärkungsschichten (21; 121) um den Strukturträger zu drapieren, um eine Verbundhülle auszubilden, die den Strukturkern umgibt und wenigstens das aerodynamische Profil des Flügels bildet.

8. Verfahren nach Anspruch 7, **dadurch gekennzeichnet, daß** der Strukturträger aus Verbundwerkstoff durch Drapieren in Form von Faserverstärkungsschichten (15; 115) gefertigt ist.

9. Verfahren nach irgendeinem der Ansprüche 7 und 8, **dadurch gekennzeichnet, daß** Faserverstärkungsschichten (21; 121) um eine von dem Strukturkern (14; 114) des Flügels und einem Flügelkern (24; 124) gebildete Einheit drapiert sind, um eine Flügelhülle zu bilden.

## Claims

1. A turbomachine stator flap comprising a vane-forming portion of aerodynamic profile (22; 122) made at least in part out of a composite material and provided at two opposite ends with fastening portions (16, 18; 116, 118), said flap being **characterised in that** it comprises a structural beam (12; 112) comprising a structural vane core and formed integrally with at least a part of the fastening portions, and a composite envelope (20; 120) surrounding the structural core and forming at least the aerodynamic profile of the vane.

2. A stator flap according to claim 1, **characterised in that** the structural beam (12; 112) is made of composite material.

3. A stator flap according to claim 1 or claim 2, **characterised in that** at least one of the fastening portions (16; 116) is provided with a metal band (30; 130).

4. A stator flap according to claim 3, **characterised in that** the fastening portion (16; 116) fitted with the metal band constitutes a pivot (36; 136), the metal band being prevented from rotating relative to the fastening portion about the pivot axis.

5. A stator flap according to any one of claims 1 to 4, **characterised in that** it has internal passages (104, 102, 106) opening out firstly at one end in at least one of the fastening portions (116) and secondly along at least one of the edges of the vane (122).

6. A turbomachine comprising a set of stator flaps installed in an inlet casing surrounded by a defrosting manifold, the turbomachine being **characterised in that** the stator flaps are according to claim 5 and the fastening portions (116) into which the internal passages of the flaps open out are received in the inlet casing via the defrosting manifold (140) so as to cause it to communicate with said internal passages.

7. A method of manufacturing a turbomachine stator flap comprising a vane-forming portion of aerodynamic profile (22; 122) made at least in part out of composite material and fitted at two opposite ends with fastening portions (16, 18; 116, 118), said method being **characterised in that** it comprises the steps consisting in:
- making a structural beam (12, 112) comprising a structural core of the vane formed integrally at least with structural cores of the fastening portions; and
- draping fiber reinforcement plies (21; 121) around the structural beam so as to make a composite envelope surrounding the structural core of the vane and forming at least the aerodynamic profile of the vane.

8. A method according to claim 7, **characterised in that** the structural beam is made of a composite material by shaped draping fiber reinforcing plies (15; 115).

9. A method according to claim 7 or claim 8, **characterised in that** fiber reinforcing plies (21; 121) are draped around the assembly constituted by the structural core (14; 114) of the vane and a former (24; 124) of the vane, in order to form a vane envelope.
